# EUROPÄISCHE PATENTSCHRIFT

(11) **EP 3 054 259 B1**
(45) Veröffentlichungstag und Bekanntmachung des Hinweises auf die Patenterteilung: **08.11.2017**
(21) Anmeldenummer: 16160435.0
(22) Anmeldetag: 10.09.2013
(51) Int. Cl.: F28F 9/18, F28F 21/08, F28D 7/16, B23K 1/00, F28D 21/00, B23K 1/002

(54) **VERFAHREN ZUR HERSTELLUNG EINES WÄRMETAUSCHERS**
METHOD FOR MANUFACTURING A HEAT EXCHANGER
PROCEDE DE FABRICATION D'UN ECHANGEUR THERMIQUE

(30) Priorität: 19.09.2012 DE 102012108821
(43) Veröffentlichungstag der Anmeldung: 10.08.2016
(62) Teilanmeldung aus: 13183635.5
(73) Patentinhaber: Benteler Automobiltechnik GmbH, 33102 Paderborn (DE)
(72) Erfinder: Aul, Eugen, 31787 Hameln (DE)
(74) Vertreter: Griepenstroh, Jörg

(56) Entgegenhaltungen:
- EP-A1- 1 982 790
- EP-A1- 2 239 530
- EP-A2- 0 957 186
- WO-A1-2006/102736
- WO-A1-2010/136524
- DE-A1- 3 149 285
- DE-A1-102005 055 481
- JP-A- 2005 055 153
- US-A1- 2012 043 063

## Beschreibung

Die vorliegende Erfindung betrifft ein Verfahren zur Herstellung eines Plattenwärmetauschers für ein Kraftfahrzeug gemäß den Merkmalen im Patentanspruch 1.

Aus dem Stand der Technik ist es bekannt, dass in Kraftfahrzeugen zur Wärmeübertragung Wärmetauscher eingesetzt werden. Beispielsweise werden solche Wärmetauscher als Kühler eingesetzt, um das Kühlwasser eines Kühlwasserkreislaufs einer Verbrennungskraftmaschine zu kühlen. Jedoch ist es auch bekannt, Gaswärmetauscher einzusetzen, mit deren Hilfe ein durch die Verbrennungskraftmaschine erzeugtes Abgas gekühlt wird. Zumeist werden dazu zwei verschiedene Medien durch den Wärmetauscher geleitet, wobei dann innerhalb des Wärmetauschers ein Wärmeübergang von einem Medium auf das andere erfolgt.

Zur konstruktiven Ausgestaltung eines Wärmetauschers sind verschiedenste Bauarten bekannt. So gibt es Plattenwärmetauscher oder aber auch Rohrbündelwärmetauscher. Letzterenfalls werden mehrere Wärmetauscherrohre innerhalb einer Wärmetauscherkassette angeordnet und über einen Rohrbund, der zumeist auch als Lochblech ausgebildet ist, formschlüssig und insbesondere fluiddicht gekoppelt. Durch die Wärmetauscherrohre strömt somit dann ein erstes Medium, wobei ein zweites Medium die Wärmetauscherrohre selbst umströmt.

Zur Herstellung solcher Rohrbündelwärmetauscher werden die Wärmetauscherrohre in das Lochblech eingesetzt und in diesem formschlüssig und/oder stoffschlüssig lagefixiert. Im Falle einer formschlüssigen Lagefixierung wird das Rohr zumindest abschnittsweise in das Lochblech eingeführt und aufgeweitet bzw. aufgetulpt. Im Falle einer stoffschlüssigen Lagefixierung wird das Rohr entweder in dem Lochblech verlötet, verklebt oder aber auch verschweißt.

In dem Übergang zwischen Wärmetauscherrohr und Lochblech treten in der Praxis häufig, insbesondere bei langjähriger und intensiver Nutzung oder aber auch bei Durchströmung mit hochkorrosiven Medien Leckagen auf, so dass bei der Herstellung von aus dem Stand der Technik bekannten Wärmetauschern hohe Produktionskosten zur Herstellung der Verbindung zwischen Wärmetauscherrohr und Lochblech aufgrund eines erhöhten Fertigungsaufwands oder besonderen Materialeinsatzes entstehen.

Aus der EP 2 239 530 A1 ist ein Plattenwärmetauscher bekannt. Eine Oberschale und eine Unterschale werden unter Eingliederung eines Lamellenblech zu einer Vollschale zusammengefügt. Mehrere dieser Vollschalen werden zwischen einem unterem und einem oberen äußeren Gehäuse platziert. Oberes und unteres Gehäuse werden dann zusammengefügt und anschließend mit den darin befindlichen Vollschalen zueinander verlötet.

Aufgabe der vorliegenden Erfindung ist es daher, ausgehend vom Stand der Technik, ein Verfahren aufzuzeigen, mit dem es möglich ist, einen Plattenwärmetauscher einfach und kostengünstig herzustellen, bei gleichzeitig hoher Dichtigkeit im Kopplungsbereich sowie der Erhöhung der thermomechanischen Festigkeit und Schwingfestigkeit.

Die zuvor genannte Aufgabe wird mit einem Verfahren zur Herstellung eines Plattenwärmetauschers gemäß den Merkmalen im Patentanspruch 1 gelöst.

Vorteilhafte Ausgestaltungsvarianten des erfindungsgemäßen Verfahrens sind in den abhängigen Ansprüchen beschrieben.

Die vorliegende Erfindung betrifft ein Verfahren zur Herstellung eines Plattenwärmetauschers für ein Kraftfahrzeug, gekennzeichnet durch folgende Verfahrensschritte:
- Bereitstellen mindestens eines Lamellenbleches sowie zweier Halbschalen, welche eine Oberschale und eine Unterschale sind,
- Aufbringen eines Lotes auf das Lamellenblech und auf die Oberschale und/oder die Unterschale,
- Einsetzen des Lamellenblechs in die Oberschale oder Unterschale und Zusammensetzen von Oberschale und Unterschale zu einer Vollschale,
- Einsetzen der Vollschale in eine Kassette und Verlöten von Oberschale, Unterschale und Lamellenblech"
- wobei das Lamellenblech und die Kassette aus einem austenitischen Werkstoff ausgebildet sind und die Halbschalen aus einem ferritischen Werkstoff und die Kassette nach innen gerichtete Einprägungen aufweist, so dass zwischen der Innenmantelfläche der Kassette sowie der Außenseite der Vollschale ein Kanal zur Durchführung eines weiteren Mediums entsteht.

Somit wird zunächst bei dem erfindungsgemäßen Herstellungsverfahren für den Plattenwärmetauscher das Lamellenblech sowie mindestens die Oberschale oder aber Unterschale mit einem Lotwerkstoff versehen. Das Lamellenblech wird dann in die Oberschale oder aber Unterschale eingesetzt und mit der dazu korrespondierenden Schale derart verschlossen, dass eine Vollschale entsteht, die das Lamellenblech umfangsseitig umgreift. Die Vollschale weist dann an einer Eintritts- und einer Austrittsseite eine Öffnung auf, so dass ein Medium durch die Vollschale geleitet werden kann, wobei innerhalb der Vollschale das Lamellenblech für eine entsprechende Turbulenzerzeugung sowie einen erhöhten Wärmeübergang des durch die Vollschale strömenden Mediums sorgt. Die Unterschale und die Oberschale werden entlang ihrer Längsseiten insbesondere mit dem Lötvorgang fluiddicht miteinander gekoppelt.

Erfindungsgemäß ist weiterhin vorgesehen, dass durch die stärkere Ausdehnung des Lamellenbleches, aber auch der in der Kassette befindlichen nach innen gerichteten Einprägungen, gegenüber der Oberschale und der Unterschale eine Lötverbindung mit besonders hoher Qualität und Dichtigkeit hergestellt wird.

Während des auf den Lotvorgang folgenden Abkühlens schrumpfen die Bauteile wiederum annähernd in ihren Ursprungszustand zurück. Hierdurch entsteht ein innerer Spannungsvorgang, so dass der Wärmetauscher zunächst nach der eigentlichen Herstellung und vor seinem Verbau bzw. Einsatz in dem Kraftfahrzeug besonders qualitativ hochwertigen Lötverbindungen unterzogen wird. Während des Einsatzes im Kraftfahrzeug ist der Kraftfahrzeugwärmetauscher jedoch dann Einsatzbedingungen aufgrund der durch ihn zu führenden Medien von bis zu mehreren 100° C ausgesetzt. Hierdurch entsteht während des Einsatzes eine derartige Wärmebehandlung, die die Eigenspannungen abbaut, so dass bereits nach einem Betrieb des Kraftfahrzeugwärmetauschers von 2 bis 5 Stunden die Eigenspannungen nahezu vollständig und dauerhaft abgebaut sind. Mithin steht der erfindungsgemäß hergestellte Kraftfahrzeugwärmetauscher in Plattenversion dann bei Raumtemperatur nicht mehr unter Eigenspannung. Im Betriebszustand dehnen sich wiederum die austenitischen Werkstoffe stärker aus gegenüber den ferritischen Werkstoffen, was die thermomechanische Stabilität eines solch hergestellten Kraftfahrzeugwärmetauschers erhöht und gegenüber herkömmlichen verlöteten Kraftfahrzeugwärmetauschern, welche insbesondere aus gleichartigen Werkstoffen ausgebildet sind, eine Erhöhung der Lebensdauer in Bezug auf die Standfestigkeit erreichen.

Der erfindungsgemäße Ansatz sieht vor, zwei Werkstoffe, die mit Hinblick auf die Verwendung in einem Wärmetauscher gute Wärmeleitfähigkeiten besitzen sowie eine hohe Resistenz gegen Korrosion und ebenfalls eine hohe Langlebigkeit besitzen zur Herstellung des erfindungsgemäßen Wärmetauschers einzusetzen. Ebenfalls sind die Werkstoffe untereinander thermisch gut miteinander fügbar.

Beispielsweise kann die gesamte Anordnung in einen Lötofen verbracht werden und miteinander verlötet werden.

Aufgrund der verschiedenen Wärmeausdehnungskoeffizienten und den minimierten Lotspalt und die hergestellte Lotverbindung in ihrer Qualität gesteigert.

Der Lötvorgang selber wird dann bei einer Temperatur zwischen 300° und 800° C durchgeführt oder aber als Hochtemperaturlötvorgang mit Temperaturen von mehr als 800°C, insbesondere mehr als 900° C, wobei insbesondere ein Lotflussmittel und/oder ein Zusatzwerkstoff verwendet wird. Der Lötvorgang selber kann dabei als Hartlötvorgang oder aber auch als Hochtemperaturlötvorgang durchgeführt werden. Im Rahmen der Erfindung wird insbesondere die gesamte Apparatur, mithin die zusammengesetzten Bauteile in einen Lötofen verbracht. Auch ist ein Induktionslötprozess mit der Hilfe von geeigneten Induktionsmitteln vorstellbar. Im Rahmen der Erfindung wird insbesondere ein Hochtemperaturlöten oder ein Hartlöten durchgeführt. Die Lötverfahren werden insbesondere als Vakuumverfahren, mithin als Vakuumlöten durchgeführt. Ebenfalls ist ein Löten unter Schutzgas vorstellbar, wobei hier insbesondere H2 oder aber H2/N2 als Schutzgasatmosphäre gewählt wird. Bevorzugt wird kein Flussmittel im Rahmen der Erfindung verwendet. Als Lotpaste selbst wird insbesondere ein Nickelbasislot oder aber auch ein Eisenbasislot, hier insbesondere ein Edelstahlbasislot verwendet.

Für die Halbschalen wird insbesondere ein ferritischer Chromstahl verwendet, der gegebenenfalls andere Gefügebestandteile aufweisen kann. Insbesondere wird ein Werkstoff aus der nachfolgenden Gruppe verwendet: 1.4016, 1.4509, 1.4510, 1.4521.

Für das Lamellenblech und die Kassette wird ein austenitischer rostfreier Stahl verwendet, der gegebenenfalls weitere Gefügebestandteile aufweisen kann. Im Rahmen der Erfindung wird insbesondere ein Stahl verwendet, der aus der nachfolgend aufgezählten Gruppe ausgewählt ist: 1.4301, 1.4307, 1.4401, 1.4306. Insbesondere wird der Werkstoff der Halbschalen in Relation zu dem Werkstoff des Lamellenblechs und/oder der Kassette derart ausgewählt, dass deren Wärmeausdehnungskoeffizient sich im Verhältnis von 1 : 1,2 bis 2, insbesondere von 1 : 1,4 bis 1,6 und ganz besonders bevorzugt von 1 : 1,5 unterscheiden.

Im Rahmen der Erfindung betragen die thermischen Ausdehnungskoeffizienten im Mittel bei ferritischen Stählen circa 12 x 10⁶1/K und bei austenitischen Stählen circa 17 x 10⁶1/K. Alternativ dazu wird bei gleichbleibenden Toleranzen eine Steigerung der Festigkeit der hergestellten Verbindung erreicht. Bei eingesetzten Nickelloten bilden sich bei großen Spalten intermetallische Phasen aus, die die Schwingfestigkeit der hergestellten Lotverbindung reduzieren. Bei eingesetzten Kupferloten bilden sich bei großen Spalten insbesondere die natürlichen Eigenschaften des Reinkupfers aus, mithin wird eine sehr duktile Lotverbindung mit niedriger für Kupfer spezifischer Festigkeit bereitgestellt.

Die vorliegende Erfindung sieht hier vor, austenitische Stähle mit einem kubisch flächenzentrierten Kristallgitter für das Lamellenblech und die Kassette einzusetzen, wobei die austenitischen Stähle unter anderem die Legierungsbestandteile Chrom und Nickel aufweisen. Für die ferritischen Stähle ist ein kubisch raumzentriertes Kristallgitter ausgebildet, wobei die ferritischen Stähle maßgeblich für die Halbschalen eingesetzt werden. Die ferritischen Stähle selber sind maßgeblich mit Chrom legiert und weisen einen zu vernachlässigenden oder aber keinen Anteil des kostenintensiven Legierungselements Nickel auf.

Weitere Vorteile, Merkmale, Eigenschaften und Aspekte der vorliegenden Erfindung werden in der nachfolgenden Beschreibung erläutert. Bevorzugte Ausführungsvarianten werden in den schematischen Figuren dargestellt. Diese dienen dem einfachen Verständnis der Erfindung. Es zeigen:
- Figur 1a bis c: ein erfindungsgemäßes Lamellenblech sowie eine Oberschale und Unterschale und
- Figur 2: einen erfindungsgemäß hergestellten Plattenwärmetauscher.

In den Figuren werden für gleiche oder ähnliche Bauteile dieselben Bezugszeichen verwendet, auch wenn eine wiederholte Beschreibung aus Vereinfachungsgründen entfällt.

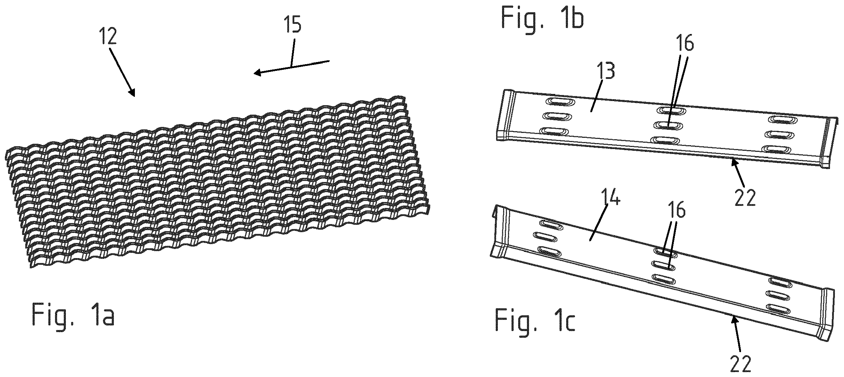

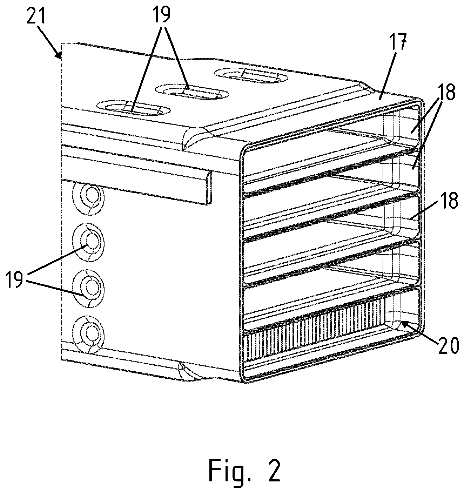

Figur 1a bis c zeigen ein erfindungsgemäßes Lamellenblech 12, eine Oberschale 13 und eine Unterschale 14. Das in Figur 1a dargestellte Lamellenblech 12 weist eine entsprechende Wellenform auf und wird in Längsrichtung 15 zwischen Oberschale 13 und Unterschale 14 eingesetzt. Die Oberschale 13 und Unterschale 14 selbst sind in Figur 1b und c dargestellt, wobei diese wiederum Ausprägungen 16 aufweisen, die von dem Innenraum bei zusammengesetzter Oberschale 13 und Unterschale 14 weg orientiert sind. Hierdurch wird bei Einsatz der Oberschale 13 und Unterschale 14 in die in Figur 2 dargestellte Kassette 17 ein entsprechender Abstand der einzelnen Vollschalen 18 untereinander und zu einer Innenmantelfläche der Kassette 17 ermöglicht.

Die Kassette 17 weist wiederum, in Figur 2 dargestellt, entsprechende Einprägungen 19 auf, die einen Abstand zu der Innenmantelfläche 7 der Kassette 17 bewerkstelligen. Zwischen der Innenmantelfläche der Kassette 17 sowie der Außenseite der Vollschalen 18 entsteht somit ein Kanal zur Durchleitung eines weiteren Mediums, wobei dann das erste zu kühlende Medium durch die Öffnungen 20 des in Figur 2 dargestellten Plattenwärmetauschers 21 leitbar sind und diesen in Längsrichtung 15 durchströmen. Erfindungsgemäß werden die Oberschale 13 und die Unterschale 14 an ihren Längsseiten 22 miteinander verlötet und hier insbesondere fluiddicht miteinander verlötet. Durch das unterschiedliche Ausdehnungsverhalten von insbesondere austenitischem Lamellenblech sowie austenitischer Kassette 17 mit Einprägungen 19 zu den ferritischen Halbschalen 13, 14 ist es somit erfindungsgemäß möglich, dass auf zusätzliche Beschwerungen, beispielsweise Gewichte während des Lötvorganges, verzichtet werden kann. Somit müssen die Gewichte nicht ebenfalls erwärmt werden, was gerade in einem Lötverfahren weniger Energie verbraucht, die ansonsten zur Erwärmung der Lotgewichte anfallen würde.

Auch wird gerade die thermomechanische Stabilität erhöht, da im Betriebsverhalten des Wärmetauschers Ausdehnungen analog zu dem Lötverfahren dazu führen, dass der Plattenwärmetauscher 21 sich nicht kontraproduktiv zu den hergestellten Lötverbindungen ausdehnt und Rissbildungen entstehen. Der Wärmetauscher erreicht so eine zwei- bis vierfache Lebensdauererhöhung. Auch können die einzelnen Teile mittels Widerstandsschweißen punktuell zueinander lagefixiert werden.

### Bezugszeichen:

12 - Lamellenblech
13- Oberschale
14- Unterschale
15- Längsrichtung
16 - Ausprägungen
17 - Kassette
18- Vollschale
19- Einprägungen
20 - Öffnungen
21 - Plattenwärmetauscher
22 - Längsseiten

## Patentansprüche

1. Verfahren zur Herstellung eines Plattenwärmetauschers (21) für ein Kraftfahrzeug, **gekennzeichnet durch** folgende Verfahrensschritte:
- Bereitstellen mindestens eines Lamellenbleches (12) sowie zweier Halbschalen, welche eine Oberschale (13) und eine Unterschale (14) sind,
- Aufbringen eines Lotes auf das Lamellenblech (12) und auf die Oberschale (13) und/oder die Unterschale (14),
- Einsetzen des Lamellenblechs (12) in die Oberschale (13) oder Unterschale (14) und Zusammensetzen von Oberschale (13) und Unterschale (14) zu einer Vollschale (18),
- Einsetzen der Vollschale (18) in eine Kassette (17) und Verlöten von Oberschale (13), Unterschale (14) und Lamellenblech (12),
- wobei das Lamellenblech (12) und die Kassette (17) aus einem austenitischen Werkstoff ausgebildet sind und die Halbschalen (13, 14) aus einem ferritischen Werkstoff sind und die Kassette (17) nach innen gerichtete Einprägungen (19) aufweist, so dass zwischen der Innenmantelfläche der Kassette (17) sowie der Außenseite der Vollschale (18) ein Kanal zur Durchführung eines weiteren Mediums entsteht.

2. Verfahren nach Anspruch 1, **dadurch gekennzeichnet, dass** der Lötvorgang bei einer Temperatur zwischen 300 und 800 Grad Celsius durchgeführt wird oder als Hochtemperaturlötvorgang, wobei insbesondere ein Lotflußmittel und/oder Lotzusatzwerkstoff verwendet wird.

3. Verfahren nach einem der Ansprüche 1 oder 2, **dadurch gekennzeichnet, dass** für die Halbschalen (13,14) ein ferritischer Chromstahl verwendet wird.

4. Verfahren nach einem der Ansprüche 1 bis 3, **dadurch gekennzeichnet, dass** für das Lamellenblech (12) und/oder die Kassette (17) ein austenitischer rostfreier Stahl verwendet wird.

5. Verfahren nach einem der Ansprüche 1 bis 4, **dadurch gekennzeichnet, dass** der Wärmeausdehnungskoeffizient des Werkstoffes der Halbschalen (13, 14) und der Werkstoff des Lamellenblechs (12) und/oder der Kassette (17) in einem Verhältnis von 1 zu 1,2 bis 2, insbesondere 1 zu 1,4 bis 1,6 stehen.

6. Verfahren nach einem der Ansprüche 1 bis 5, **dadurch gekennzeichnet, dass** der Lötvorgang in einem Ofen durchgeführt wird oder durch Widerstandserwärmung.

## Claims

1. Method for manufacturing a plate heat exchanger (21) for a motor vehicle, **characterised by** the following method steps:
- preparing at least one pin plate (12) as well as two half shells which are an upper shell (13) and a lower shell (14),
- applying a solder on the pin plate (12) and on the upper shell (13) and/or the lower shell (14),
- inserting the pin plate (12) into the upper shell (13) or lower shell (14) and combining upper shell (13) and lower shell (14) to form a full shell (18),
- inserting the full shell (18) into a cassette (17) and soldering upper shell (13), lower shell (14) and pin plate (12),
- wherein the pin plate (12) and the cassette (17) are configured from an austenite material and the half shells (13,14) are configured from a ferrite material and the cassette (17) has impressions (19) directed inwards such that a channel for conducting an additional medium is formed between the inner surface area of the cassette (17) and the outer side of the full shell (18).

2. Method according to claim 1, **characterised in that** the soldering process is carried out at a temperature of between 300 and 800 degrees Celsius or as a high-temperature soldering process, wherein in particular a soldering flux and/or soldering additive is used.

3. Method according to either of claims 1 or 2, **characterised in that** a ferrite chrome steel is used for the half shells (13, 14).

4. Method according to any one of claims 1 to 3, **characterised in that** an austenite stainless steel is used for the pin plate (12) and/or the cassette (17).

5. Method according to any one of claims 1 to 4, **characterised in that** the thermal expansion coefficient of the material of the half shells (13, 14) and the material of the pin plate (12) and/or the cassette (17) is in a ratio of 1:1.2 to 2, in particular 1:1.4 to 1.6.

6. Method according to any one of claims 1 to 5, **characterised in that** the soldering process is carried out in a furnace or by resistance heating.

## Revendications

1. Procédé de fabrication d'un échangeur de chaleur à plaques (21) pour un véhicule automobile, **caractérisé par** les étapes de procédé suivantes :
- préparation d'au moins une tôle d'aération (12) ainsi que de deux demi-coques qui sont une coque supérieure (13) et une coque inférieure (14),
- application d'un métal à braser sur la tôle d'aération (12) et sur la coque supérieure (13) et/ou la coque inférieure (14),
- mise en place de la tôle d'aération (12) dans la coque supérieure (13) ou dans la coque inférieure (14) et assemblage de la coque supérieure (13) et de la coque inférieure (14) en une coque complète (18),
- mise en place de la coque complète (18) dans un caisson (17) et brasage de la coque supérieure (13), de la coque inférieure (14) et de la tôle d'aération (12),
- dans lequel la tôle d'aération (12) et le caisson (17) sont réalisés en un matériau austénitique et les demi-coques (13, 14) sont réalisées en un matériau ferritique et le caisson (17) comporte des parties embouties (19) dirigées vers l'intérieur, de telle sorte qu'il se forme entre la surface latérale intérieure du caisson (17) et le côté extérieur de la coque complète (18) un canal pour la circulation d'un autre fluide.

2. Procédé selon la revendication 1, **caractérisé en ce que** l'opération de brasage est effectuée à une température comprise entre 300 et 800 °C ou comme une opération de brasage à haute température, un flux décapant de brasage et/ou un métal d'apport de brasage étant notamment utilisés.

3. Procédé selon l'une des revendications 1 ou 2, **caractérisé en ce que**, pour les demi-coques (13, 14), on utilise un acier au chrome ferritique.

4. Procédé selon l'une des revendications 1 à 3, **caractérisé en ce que**, pour la tôle d'aération (12) et/ou le caisson (17), on utilise un acier inoxydable austénitique.

5. Procédé selon l'une des revendications 1 à 4, **caractérisé en ce que** le coefficient de dilatation thermique du matériau des demi-coques (13, 14) et du matériau de la tôle d'aération (12) et/ou du caisson (17) sont dans un rapport de 1 à 1,2 à 2, en particulier de 1 à 1,4 à 1,6.

6. Procédé selon l'une des revendications 1 à 5, **caractérisé en ce que** l'opération de brasage est effectuée dans un four ou par chauffage de résistance.
